# EUROPEAN PATENT APPLICATION

(11) **EP 3 184 806 A1**
(43) Date of publication of application: **28.06.2017**
(21) Application number: 15202477.4
(22) Date of filing: 23.12.2015
(51) Int. Cl.: F03B 3/12, F03B 17/06

(54) **A HYDROELECTRIC TURBINE BLADE CONNECTOR**

(71) Applicant: Openhydro IP Limited, Dublin 2 (IE)
(72) Inventor: MORHAN, Matthieu, Drumcondra Dublin 9 (IE); DIGARD, Sebastien, Blackrock Country Louth (IE); HARNETT, Kevin, Dundrum Dublin 16 (IE); DOYLE, Tom, Drumcondra Dublin 9 (IE)
(74) Representative: O'Neill, Brian

(57) **Abstract**

The present invention is concerned with a hydroelectric blade connector which is operable to secure a blade to a rotor of a hydroelectric turbine and to securely retain the blade during operation, the blade connector include a pair of interlocking parts, the first part being a tapered root of the blade itself, and the second part being a body provided in or formed integrally with the rotor and defining a tapered channel for receiving the root of the blade in order to establish a taper lock therewith.

## Description

### Field of the invention

The present invention is concerned with a hydroelectric turbine blade connector for securing a blade to a rotor of a turbine in a simple yet effective manner in order to reduce manufacturing cost and complexity while providing an interface between a root of the blade and the rotor which will secure the blade in position and resist the significant forces experienced during operation.

### Background of the invention

As the population of the planet grows, and technology becomes an increasingly integral part of our lives, our energy needs are constantly growing, while at the same time we are aware of the damage to our environment that this energy consumption brings. Significant efforts are therefore being made in the quest for forms of large output renewal energy.

Tidal power is one such potential energy source, but it is also one of the most difficult forms of energy to harness due to the harsh and inhospitable environments in which tidal hydroelectric turbine generators must operate. The punishing nature of the prevailing conditions at suitable tidal sites expose the various components of hydroelectric turbines to significant forces that put large stresses on the mechanical and electrical components of the turbine, and the operational failure of such components has a relatively high probability.

The various components, in particular exposed mechanical parts such as the blades, are thus designed to withstand these conditions for prolonged periods, and preferably incorporate a level of redundancy should a minor component cease functioning. The turbines should also be designed with maximum modularity, again with a particular emphasis on the more consumable components such as the blades, in order to allow for a relatively straightforward replacement should the turbine need to be retrieved from the seabed for repair.

It is therefore an object of the present invention to provide a solution to the above mentioned problem.

### Summary of the invention

According to a first aspect of the present invention there is provided a hydroelectric turbine blade connector comprising cooperating first and second sections, the first section comprising at least a portion of a root of a turbine blade; the second section comprising a body defining a channel for receiving at least the portion of the root of the blade, the channel comprising a first open end, a second end, and at least a pair of sidewalls extending between the first and second ends, the channel reducing in cross sectional area between the first end and the second end; and a locking system operable to establish a taper lock between the root and the channel.

Preferably, the channel is oriented such that the cross sectional area reduces with increasing distance from a tip of the blade when the root of the blade is retained in the channel.

Preferably, the channel is oriented such that centrifugal and/or axial forces experienced by the blade during operation act to maintain the taper lock between the root and the channel.

Preferably, the channel and root are dimensioned to define a gap between the second end of the channel and an opposed end face of the root of the blade when the taper lock is established.

Preferably, the root of the blade reduces in cross sectional area with increasing distance from a tip of the blade.

Preferably, the locking system comprises a tensioner operable to draw the root of the blade into the channel.

Preferably, the tensioner comprises at least one coupling having a first portion fixed to and projecting from the root of the blade, and a corresponding second portion engagable with the first portion and against the second end.

Preferably, the root of the blade defines an internal cavity within which the first portion of the tensioner is partially located.

Preferably, the second end comprises at least one opening through which the tensioner extends.

Preferably, the locking system comprises one or more ties extending between the pair of sidewalls of the channel.

Preferably, the root of the blade comprises one or more slots to accommodate the one or more ties when the root is retained within the channel.

Preferably, the body is formed integrally with a rotor of a hydroelectric turbine.

Preferably, the body comprises an insert mountable to a rotor of a hydroelectric turbine.

Preferably, the hydroelectric turbine blade connector comprises one or more spacers locatable between the sidewalls of the channel and the root of the blade.

Preferably, the channel and corresponding portion of the root of the blade are dimensioned such that the taper lock can retain the blade in the absence of the operation of the locking system.

Preferably, the hydroelectric turbine blade connector comprises a flange surrounding the open end of the channel

According to a second aspect of the invention there is provided a hydroelectric turbine comprising an array of blades and a corresponding array of blade connectors according to a first aspect of the invention.

### Brief description of the drawings

The present invention will now be described with reference to the accompanying drawings, in which:

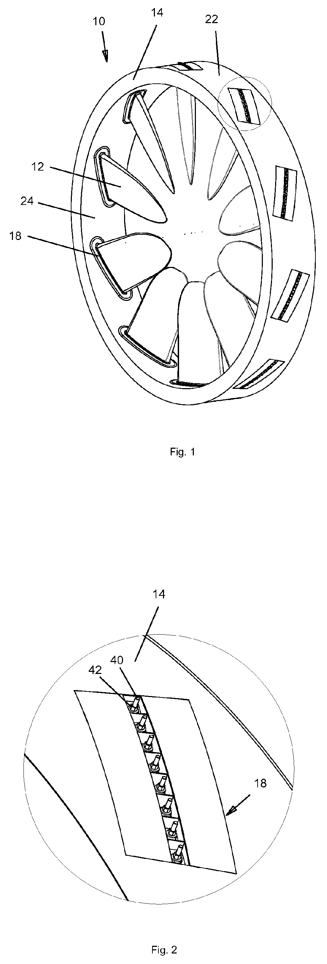

Figure 1 illustrates a perspective view of a rotor forming part of a hydroelectric turbine;
Figure 2 illustrates an enlarged view of a portion of an exterior surface of the rotor shown in Figure 1;

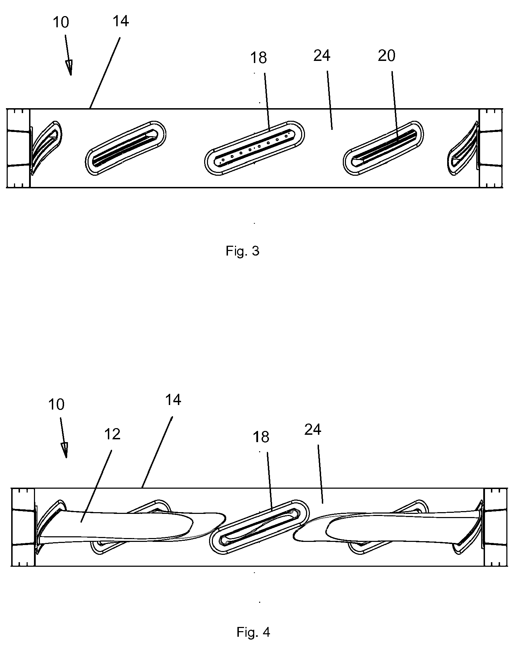

Figure 3 illustrates a diametric section of the rotor illustrated in Figures 1 and 2, with the blades omitted;;
Figure 4 illustrates a diametric section of the rotor illustrated in Figures 1 and 2 with the blade included;
Figure 5 illustrates a single blade and associated blade connector according to a preferred embodiment of the present invention;
Figure 6 illustrates an enlarged view of the blade connector illustrated in Figure 5;
Figure 7 illustrates a perspective view of a rotor insert forming part of the blade connector shown in Figures 5 and 6; and
Figure 8 illustrates a perspective view of a hydroelectric turbine incorporating the rotor illustrated in Figure 1.

### Detailed description of the drawings

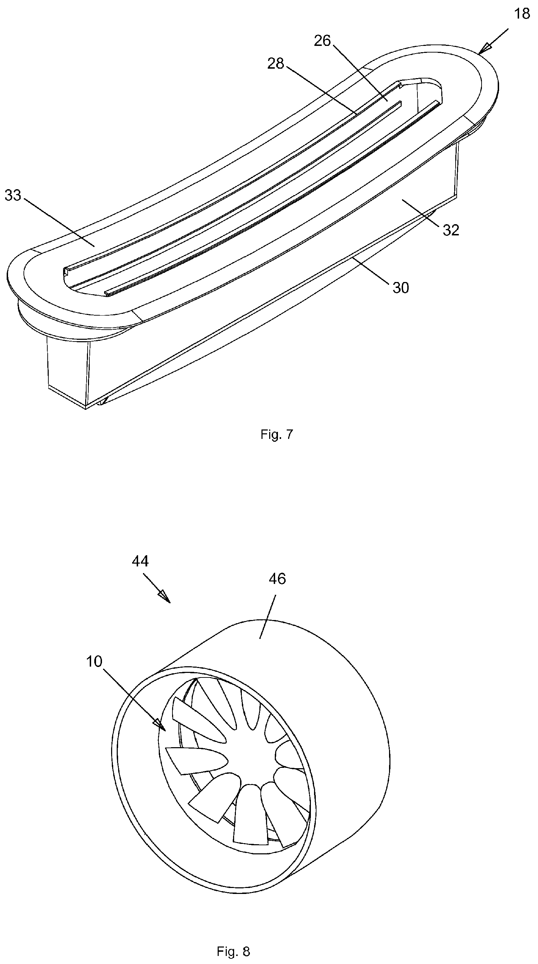

Referring now to the accompanying drawings there is illustrated a rotor 10 which, in use forms part of a hydroelectric turbine 44 (shown in Figure 8) and which is driven by the tidal or other flow of water across blades 12 of the rotor 10 in order to effect the rotation thereof, relative to a fixed housing 46 (Figure 8) in which the rotor 10 is captured for rotation. The housing 46 forms a venturi to funnel the water across the rotor 10 in either direction, in addition to providing a space within which the electrical components of the turbine 44 are located. The rotor 10 spins relative to a fixed stator located within the housing 46 of the turbine 44 in order to generate electrical power in known fashion. The working components of the generator are well known in the art and no further description of the configuration and/or operation of same are therefore necessary.

In the embodiment illustrated the rotor 10 comprises an array of the blades 12 mounted in cantilever fashion from a rim 14, the blades 12 each pointing radially inwardly towards a centre of the rotor 10, but not extending fully to the centre. It will of course be appreciated from the following description of the operation of the invention that the number, along with the configuration and orientation of the blades 12, may be varied.

In order to retain each blade 12 securely on the rim 14, in a manner which is capable of withstanding the significant loading that is experienced during the normal operating conditions of the associated hydroelectric turbine 44 of which the rotor 10 forms a part, the present invention provides a blade connector which comprises cooperating first and second sections. The first section comprises at least a portion of a root 16 of the blade 12, the second section comprising a body 18 which, in the embodiment illustrated is in the form of insert 18 which is locatable within a corresponding slot 20 formed in the rim 14, the slot 20 extending through the rim 14 from an outer surface 22 to an inner surface 24 thereof.

The insert 18 defines a channel 26 therein which extends from an open end 28 of the insert 18 to an opposed second end 30, the channel 26 further comprising a pair of opposed side walls 32 extending between the first and second ends 28, 30. The side walls 32 taper inwardly towards one another between the first and second ends 28, 30 such that the cross sectional area of the channel 26 reduces towards the second end 30. The insert 18 is oriented within the slot 20 such that the open end 28 faces onto the inner surface 24 and the second end 30 faces onto the outer surface 22. The insert 18 additionally comprises a lip or flange 33 circumscribing the open end 28 and which overlies the outer edges of the slot 20. The flange 33 acts to reduce lateral spreading or opening of the channel 26 during installation of the blades 12, as described hereinafter.

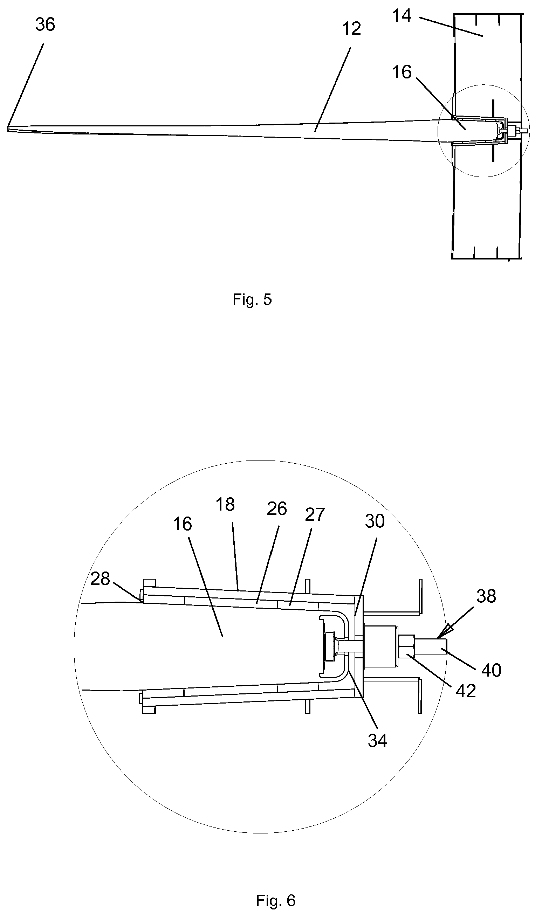

The root 16 of the blade 12 is dimensioned to be at least partially received and retained within the channel 26, and thus incorporates a corresponding taper extending inwardly towards a rear end 34 of the blade 12, opposite a tip 36 thereof, such that a taper lock can be established between the root 16 and the channel 26 to secure the blade 12 in place on the rim 14. As a result the root 16 reduces in cross sectional area in the direction of the rear end 34. The cross sectional area of the rear end 34 is however slightly greater than the cross sectional area at the second end 30 of the channel 26, thereby ensuring that the root 16 cannot bottom out within the channel 26, and so the rear end 34 remains spaced from the second end 30 when the root 16 is fully inserted into the channel 26, such as to define a gap between the rear 34 and the second end 30. This gap allows the centrifugal forces acting, in use, on the blade 12 during rotation of the rotor 10 to further press the root 16 into the channel 26 and maintain or increase the taper lock that is established between the root 16 and the side walls 32 of the channel 26. Thus the tapering root 16 and the corresponding tapering side walls 32 together form a locking system which is operable to establish the above mentioned taper lock between the root 16 and the channel 26 in order to retain the blade 12 on the rim 14. Optionally a number of spacers 27 may be located in the channel 26 between the root 16 and the side walls 32, as can be seen in Figure 6. If such spacers are employed it is not essential that the cross sectional area of the rear end 34 be greater than the cross sectional area at the second end 30 of the channel 26, as the spacers 27 will prevent the rear end 34 from bottoming out within the channel 26, to ensure the rear end 34 remains spaced from the second end 30 when the root 16 is fully inserted into the channel 26.

The locking system preferably additionally comprises a tensioner 38 in the form of one or more, preferably an array of, bolts 40 which are at least partially embedded within the root 16 and project from the rear end 34 to pass through a corresponding opening in the second end 30 where the free end of the bolt 40 is then accessible from the outer surface 22 of the rim 14. The tensioner 38 further comprises a corresponding number of nuts 42 which are then threaded onto the bolts 40 from the outer surface 22 and can thus be tightened against the outside of the second end 30 in order to positively draw the root 16 of the blade 12 into the channel 26 in order to establish the taper lock therebetween. This clamping force can then be combined with the tension applied by the tensioners 38 in order to securely retain the blade 12 in place.

It will be appreciated that bolts 40 and nuts 42 could be replaced with any other suitable means of pulling the root 16 into the channel 26. It will also be appreciated that due to the orientation of the channel 26, reduction in cross sectional area with increasing radial distance, even if one or more of the tensioners 38 cease to function, whether due to damage or otherwise, the centrifugal force experienced by each blade 12 during operation will act to maintain and likely increase the taper lock and thus provide redundancy to the tensioners 38.

As mentioned above, the incorporation of the flange 33 around the open end 28 of the insert 18 helps to minimize lateral spreading or opening/deformation of the channel 26 as the root 16 is drawn into the channel 26 by the tensioners 38. To a lesser extent the flange 33 may also ensure that the insert 18 is retained in position and does not migrate through the slot 20, in particular during operation of the turbine 44 when significant loading will be applied to the blade 12 and which will be transmitted, via the root 16, to the insert 18. The insert 18 is thus preferably bonded or otherwise affixed in position in the respective slot 20 in the rim 14.

While in the embodiment illustrated the body 18 is in the form of an insert locatable in one of the slots 20, it is also envisaged that the body 18 could be formed integrally with the rim 14.

As an alternative or addition to the tensioners 38, the locking system may comprise deformable side walls 32 wherein the channel 26 may be laterally deformed or widened by drawing the side walls 32 away from one another prior to insertion of the root 16, and once the root 16 is located between the deformed side walls 32 the force deforming the side walls 32 is released in order to allow the side walls 32 to resiliently deform inwardly against the root 16 in order to clamp against the root 16 to establish the taper lock therewith. One or more hydraulic or pneumatic jacks (not shown, for example, may be used to deform the side walls 32.

As a further alternative one or more ties (not shown) may be provided between the pair of side walls 32 in order to reduce or prevent deformation of the side walls 32. With such an arrangement it would then be necessary to provide the root 16 with a corresponding number or slots (not shown) extending inwardly from the rear end 34 in order to accommodate the ties (not shown) as the root 16 is inserted into the channel 26. This arrangement may also incorporate the tensioners 38 in order to positively draw the route 16 into the channel 26. The ties (not shown) extending between the side walls minimises outward deformation of the side walls 32 as the root 16 is drawn into the channel 26, for example by the tensioners 38, in order to maximise the surface area of the side walls 32 which establish the taper lock with the root 16.

It will thus be appreciated that the blade connector of the present invention provides a relatively simple yet highly effective means of securing the blades 12 to the rim 14 of the rotor 10, and to ensure that the blades 12 remain secured in position during operation when subject to significant centrifugal and axial loading, even if one or more of the tensioners 38 used to position the blades 12 were to fail.

## Claims

1. A hydroelectric turbine blade connector comprising cooperating first and second sections, the first section comprising at least a portion of a root of a turbine blade; the second section comprising a body defining a channel for receiving at least the portion of the root of the blade, the channel comprising a first open end, a second end, and at least a pair of sidewalls extending between the first and second ends, the channel reducing in cross sectional area between the first end and the second end; and a locking system operable to establish a taper lock between the root and the channel.

2. A hydroelectric turbine blade connector according to claim 1 in which the channel is oriented such that the cross sectional area reduces with increasing distance from a tip of the blade when the root of the blade is retained in the channel.

3. A hydroelectric turbine blade connector according to any preceding claim in which the channel is oriented such that centrifugal and/or axial forces experienced by the blade during operation act to maintain the taper lock between the root and the channel.

4. A hydroelectric turbine blade connector according to any preceding claim in which the channel and root are dimensioned to define a gap between the second end of the channel and an opposed end face of the root of the blade when the taper lock is established.

5. A hydroelectric turbine blade connector according to any preceding claim in which the root of the blade reduces in cross sectional area with increasing distance from a tip of the blade.

6. A hydroelectric turbine blade connector according to any preceding claim in which the locking system comprises a tensioner operable to draw the root of the blade into the channel.

7. A hydroelectric turbine blade connector according to claim 6 in which the tensioner comprises at least one coupling having a first portion fixed to and projecting from the root of the blade, and a corresponding second portion engagable with the first portion and against the second end.

8. A hydroelectric turbine blade connector according to claim 7 in which the root of the blade defines an internal cavity within which the first portion of the tensioner is partially located.

9. A hydroelectric turbine blade connector according to any of claims 6 to 8 in which the second end comprises at least one opening through which the tensioner extends.

10. A hydroelectric turbine blade connector according to any preceding claim in which the locking system comprises one or more ties extending between the pair of sidewalls of the channel.

11. A hydroelectric turbine blade connector according to claim 10 in which the root of the blade comprises one or more slots to accommodate the one or more ties when the root is retained within the channel.

12. A hydroelectric turbine blade connector according to any preceding claim in which the body is formed integrally with a rotor of a hydroelectric turbine.

13. A hydroelectric turbine blade connector according to any preceding claim in which the body comprises an insert mountable to a rotor of a hydroelectric turbine.

14. A hydroelectric turbine blade connector according to any preceding claim comprising one or more spacers locatable between the sidewalls of the channel and the root of the blade.

15. A hydroelectric turbine blade connector according to any preceding claim in which the channel and corresponding portion of the root of the blade are dimensioned such that the taper lock can retain the blade in the absence of the operation of the locking system.

16. A hydroelectric turbine blade connector according to any preceding claim comprising a flange surrounding the open end of the channel.
